# EUROPEAN PATENT SPECIFICATION

(11) **EP 3 318 447 B1**
(45) Date of publication and mention of the grant of the patent: **01.05.2019**
(21) Application number: 16197848.1
(22) Date of filing: 08.11.2016
(51) Int. Cl.: B60R 11/04

(54) **CAMERA MOUNTING APPARATUS**
KAMERAMONTAGEVORRICHTUNG
APPAREIL DE MONTAGE DE CAMÉRA

(43) Date of publication of application: 09.05.2018
(73) Proprietor: Alpine Electronics, Inc., Tokyo (JP)
(72) Inventor: Galos, Andreas, 70567 Stuttgart (DE)
(74) Representative: Schmitt-Nilson Schraud Waibel Wohlfrom Patentanwälte Partnerschaft mbB

(56) References cited:
- EP-A1- 2 371 686
- WO-A1-2015/074330
- CN-A- 103 780 814
- JP-A- H0 597 000
- JP-U- H0 545 679
- US-A1- 2016 001 713

## Description

The present invention relates to a camera mounting apparatus for mounting a camera to a surface of a vehicle.

Drivers may wish to place a camera on a vehicle surface to record their driving route or to record other videos of a trip when driving with their vehicle. One possibility for placing a camera with respect to a vehicle is mounting it outside or inside the vehicle, e.g. on a surface of the vehicle, such as the roof of a car. During such a trip, longitudinal and lateral forces affect a mounting apparatus with which a camera is mounted to the vehicle surface. For example, during a crash or during a drive off paved roads, the stability of such a mounting apparatus becomes problematic.

JP 1993-097000 A shows an in-vehicle photographing instrument comprising a base, a turntable and a camera arranged on the turntable, the base being held in position by using magnets and the turntable being rotatable to provide different views for the camera.

Other camera mounting apparatuses for action cameras like a GoPro® are commonly known. These camera mounting apparatuses are to be attached by one or more vacuum cups on a vehicle surface. On these apparatuses a camera is fixed with an arm holding the camera. These camera mounting apparatuses are not allowed to be used on public roads since they cannot be attached safely to the surface of the vehicle.

The described camera mounting apparatuses are either not sufficiently crash resistant, are difficult to remove manually from a surface of a vehicle or fail to provide a stiff and rigid structure.

It is an object of the invention to provide an improved camera mounting apparatus for mounting a camera to a surface of a vehicle that provides improved properties regarding crash resistance, detachability and rigid structure.

JP H05 45679 U shows a holding apparatus with which a camera can be installed via rectangular magnets on a vehicle. The apparatus comprises a base with two holding pieces attached on either side of base. These holding pieces each comprise four rectangular magnets. The base includes a contact piece, a covering device with sideboards and a camera mounting base together with mounting screw. The covering device is rotatably attached with one end to the contact piece and the camera mounting base is rotatably attached to an opposite end of the covering device.

The invention relates to a camera mounting apparatus according to claim 1. Further embodiments are disclosed in the dependent claims.

An embodiment described herein relates to a camera mounting apparatus for mounting a camera to a surface of a vehicle, comprising a hollow main body that is configured to receive a camera and having an underside which is configured to abut against the surface of the vehicle, at least one side body having the form of a rib and having an underside which is configured to abut against the surface of the vehicle, and which comprises in its inner space at least one magnet receiving portion located at the underside of the side body, wherein the magnet receiving portion is configured to receive a magnet for holding the vehicle camera mounting apparatus on the surface of the vehicle through magnetic attraction force in interaction with the surface of the vehicle, and an interlinkage which is located at the respective underside of the side body and the hollow main body, and which is configured to provide a gap between the side body and the hollow main body and to flexibly and elastically connect the hollow main body and the side body such that the side body is capable of being removed from the surface of the vehicle towards the hollow main body so as to lift the at least one magnet from the surface of the vehicle.

By providing a camera mounting apparatus with at least a hollow main body, at least one side body having the form of a rib and an interlinkage that flexibly and elastically connects the hollow main body and the at least one side body, on the one hand a stiff camera mounting apparatus is advantageously achieved. The flexible and elastic interlinkage allows on the other hand to remove the at least one side body and the hollow main body sequentially from the surface and not necessarily at the same time. In other words, the at least one side body and the hollow main body can be lifted or curled up individually to remove these bodies body-by-body. In consequence, the camera mounting apparatus can be easier removed from a surface of a vehicle than previous camera mounting apparatuses and/or greater magnetic forces can be applied. Further, the rib structure of the at least one side body increases stiffness and advantageously directs air along the camera mounting apparatus to decrease air resistance while the vehicle moves. The hollow main body and the at least one side body further provide an increased structural stiffness for the camera mounting apparatus.

Since the interlinkage is flexible and elastic, the camera mounting apparatus can be mounted advantageously and repeatedly to various vehicle curvatures and/or shapes, since the hollow main body and the at least one side body are movably connected by the flexible and elastic interlinkage.

The hollow main body may comprise a magnet receiving portion at its underside to safely mount the hollow main body to a surface of a vehicle. Further, the hollow main body may comprise a plate at its underside that holds a camera firmly in the hollow main body, the plate being configured to provide a hollow portion for a magnet or the plate being magnetic itself to provide magnet attraction force to the hollow main body, specifically to the underside of the hollow main body.

The magnet receiving portion of the at least one side body can be positioned at the underside of the at least one side body to provide an optimized position for a magnet or a plurality of magnets such that the magnetic attraction force is sufficient to attach the camera mounting apparatus more safely to a surface of a vehicle.

Particularly, the hollow main body, the side body and the interlinkage are formed such that the side body is capable of being removed from the surface of the vehicle towards the hollow main body up until the side body abuts against the hollow main body. Due to this arrangement of the camera mounting apparatus, the interlinkage is protected against overstressing when removing the camera mounting apparatus resulting in damaging the interlinkage that could lead to a fracture or a rupture of the interlinkage. Further, stronger lifting forces can be applied since the side body shores up against the hollow main body when lifted and increases rigidity.

The hollow main body and the at least one side body may be made of plastic, aluminum or the like, to provide protection for a camera mounted in the hollow main body and to achieve a high durability for the camera mounting apparatus. These materials may be lightweight materials to provide a light camera mounting apparatus that withstands high velocities, acceleration and centrifugal forces. Reduced magnetic attraction forces may be necessary to attach the camera mounting apparatus safely to a surface of the vehicle.

The interlinkage may be made of plastic or other flexible material to provide flexibility and elasticity to the camera mounting apparatus for attaching the camera mounting apparatus to various vehicle curvatures and shapes and to remove the camera mounting apparatus in a preferred manner.

The interlinkage is positioned at the underside of the camera mounting apparatus to allow for a better removability of the camera mounting apparatus, since the hollow main body or the at least one side body may be used as a lever. The length of such formed lever increases with its distance to the interlinkage. Furthermore, the air resistance of such interlinkage during moving of the vehicle is optimized, since an air stream flows over the interlinkage and not around the interlinkage.

The at least one side body may be a side body which is hollow at least in parts thereof. This advantageously increases the stiffness of the side body and thereby the stiffness of the camera mounting apparatus.

In one embodiment of the camera mounting apparatus the side body is a first side body, and the vehicle camera mounting apparatus further comprises a second side body having the form of a rib and an underside which is configured to abut against the surface of the vehicle and which is connected to the hollow main body or the first side body, and which comprises in its inner space at least one magnet receiving portion located at the underside of the second side body, wherein the magnet receiving portion is configured to receive a magnet for holding the vehicle camera mounting apparatus on the surface of the vehicle through magnetic attraction force in interaction with the surface of the vehicle. The second side body provides a favorable mountability of the camera mounting apparatus to a surface of the vehicle in that the magnetic force can be scaled up with the number of side bodies.

In a further embodiment of the camera mounting apparatus, the second side body is connected to the hollow main body at a side opposite to the first side body through a second interlinkage which is located at the respective underside of the hollow main body and the second side body, and which is configured to flexibly and elastically connect the second side body and the hollow main body. This advantageously assures that the hollow main body is mounted on two opposite sides to a surface of the vehicle thereby providing a more secure mounting situation. In this embodiment, only the two side bodies may be provided with magnets to achieve a sufficient magnetic attraction force for mounting the camera mounting apparatus to a surface of a vehicle.

In a further embodiment of the camera mounting apparatus, the second side body is connected to the first side body at a side opposite to the hollow main body. This allows for increasing an area of magnetic attraction force in the camera mounting apparatus.

In a further embodiment of the camera mounting apparatus, the second side body is connected to the first side body through a second interlinkage which is located at the respective underside of the first side body and the second side body, and which is configured to flexibly and elastically connect the second side body and the first side body such that the second side body is capable of being removed from the surface of the vehicle towards the first side body so as to lift the at least one magnet of the second side body from the surface of the vehicle. This results in an advanced removability or detachability of the camera mounting apparatus, since the two side bodies can be removed from a surface of a vehicle, to which the camera mounting apparatus is attached, sequentially, thereby achieving that only the magnetic attraction force of one of the side bodies has to be overcome at a time.

In a further embodiment of the camera mounting apparatus, the first side body, the second side body and the second interlinkage are formed such that the second side body is capable of being removed from the surface of the vehicle towards the first side body up until the second side body abuts against the first side body. This is advantageous, since the interlinkage is prevented from overstressing, especially when removing the camera mounting apparatus from a surface of a vehicle, thereby increasing the durability of this second interlinkage and/or removing forces may be increased.

In a further embodiment, the camera mounting apparatus comprises multiple side bodies connected through respective interlinkages and arranged symmetrically at a first side of the hollow main body and a second side of the hollow main body opposite the first side, wherein each of the side bodies comprises at least one magnet, particularly comprising multiple side bodies on each side of the hollow main body. This construction achieves an advantageous camera mounting apparatus that may be safely mounted to a surface of a vehicle and provide a high resistance against removing forces like acceleration forces and centrifugal forces.

In a further embodiment, the camera mounting apparatus comprises multiple side bodies arranged at one side of the hollow main body, wherein each of the side bodies comprises at least one magnet, wherein the magnets of the side bodies are arranged and dimensioned such that the magnetic attraction force increases in a direction from an outermost side body to the side body adjacent the hollow main body. This arrangement is advantageous, since it provides a better removability of the camera mounting apparatus. The outer side bodies provide less magnetic attraction force than the side bodies being closest to the hollow main body. By lifting more and more side bodies on one side of the hollow main body, the leverage on the next side body still attached to the surface of the vehicle increases and can be removed quicker.

In a further embodiment of the camera mounting apparatus, the at least one side body, or at least one of the side bodies, respectively, further comprises in its inner space at least one electrical energy storage device receiving portion to receive at least one electrical energy storage device, particularly one or more batteries, configured to provide electrical energy to the camera. This construction provides a longer run time, especially up to a full day, of a camera positioned in the hollow main portion, and still having an aerodynamic structure, since the at least one electrical energy storage device may be integrated in the at least one side body.

In a further embodiment of the camera mounting apparatus, the at least one electrical energy storage device receiving portion comprises a substantially cylindrical cross-section.

In a further embodiment of the camera mounting apparatus, the at least one side body comprises a trapezoidal cross-section with a base wall at the underside and a top wall at a side opposite the underside, wherein the top wall has a lower extension length than the base wall. This is an advantageous structure to reduce the air resistance of the at least one side body. The trapezoidal cross section allows the at least one side body to abut to a sidewall of the hollow main body or to a sidewall of another side body adjacent to the at least one side body comprising a trapezoidal cross-section, thereby preventing the interlinkage from overstress due to unnecessary bending of the at least one side body apart with respect to the hollow main body or the another side body.

In a further embodiment of the camera mounting apparatus, the at least one side body further comprises at least one side wall adjacent to the hollow main body connecting the base wall and the top wall of the at least one side body, wherein the at least one side wall is inclined with respect to the normal to the underside of the at least one side body, particularly at an angle between 2° and 10°, more particularly at an angle of 7°. This is an efficient construction to prevent the interlinkage between the at least one side body and the hollow main body from overstressing and/or damage resulting from overstressing.

In a further embodiment of the camera mounting apparatus, the hollow main body comprises in its inner space a camera receiving portion that is configured to receive the camera, the camera receiving portion arranged such as to receive the camera from the underside of the hollow main body and comprising at least one retaining device arranged to hold the camera inside the camera receiving portion. The retaining device may be a separate protrusion from the inside surface of the camera receiving portion or the retaining device may be an upper wall of the hollow main body restricting the camera receiving portion in the direction opposite to the underside of the camera mounting apparatus. This is an advantageous configuration to fix a camera inside the camera mounting apparatus. Furthermore, this embodiment enables to reduce the risk of damage and losing a camera attached to the camera mounting apparatus.

In a further embodiment of the camera mounting apparatus, the at least one retaining device is arranged to hold the camera inside the camera receiving portion such as to allow a camera lens to reach through an opening of the hollow main body at a top side opposite the underside to enable a line of sight of the camera outside the hollow main body. This allows for an advantageous unobstructed view of the camera and also increases the safety for the camera as only the lens reaches outside of the camera mounting apparatus.

In a further embodiment of the camera mounting apparatus, the hollow main body comprises a front surface extending from the underside to a top side opposite the underside with respect to a vehicle moving direction. More specific, the front surface is inclined in a direction from the underside to the top side with respect to the surface of the vehicle. This leads to a preferred aerodynamic structure of the camera mounting apparatus, the inclined front surface reducing the air resistance of the camera mounting apparatus.

The camera mounting apparatus may be formed, e.g. such that the hollow main body, the at least one side body and the interlinkage are formed integrally such as by printing or molding or extrusion. This provides an advantageous stability of the camera mounting apparatus.

Exemplary embodiments of the invention are described in greater detail below with reference to the enclosed figures.
Fig.1 is a perspective view of a camera mounting apparatus according to an exemplary embodiment of the invention.
Fig.2 illustrates a cross-sectional view of the camera mounting apparatus of Fig.1.
Fig.3 illustrates a cross-sectional view of the camera mounting apparatus of Fig.1 together with a camera and an adapter base.
Figs.4a and 4b illustrate the camera mounting apparatus of Fig.1 while removing the camera mounting apparatus from a surface of a vehicle.

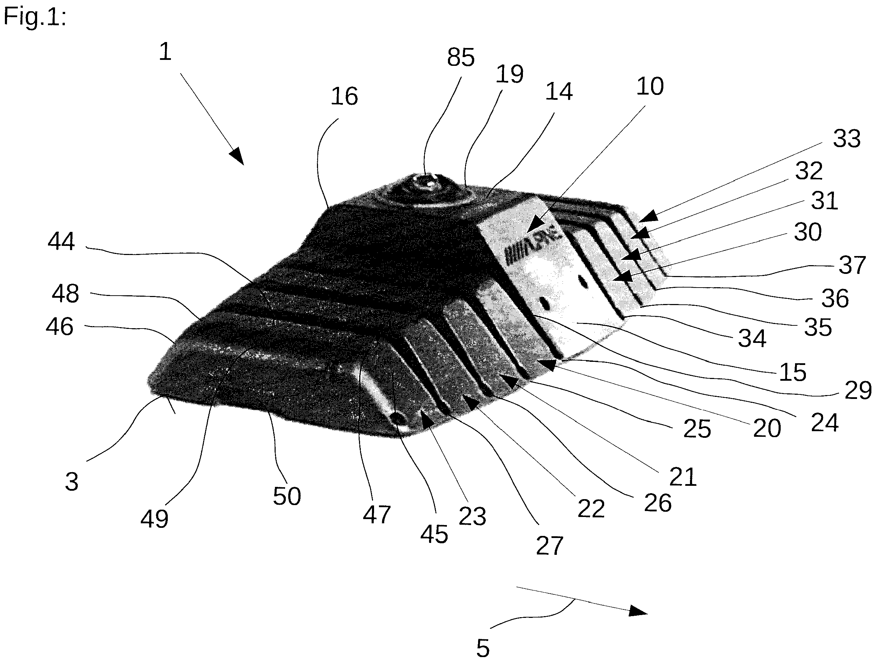

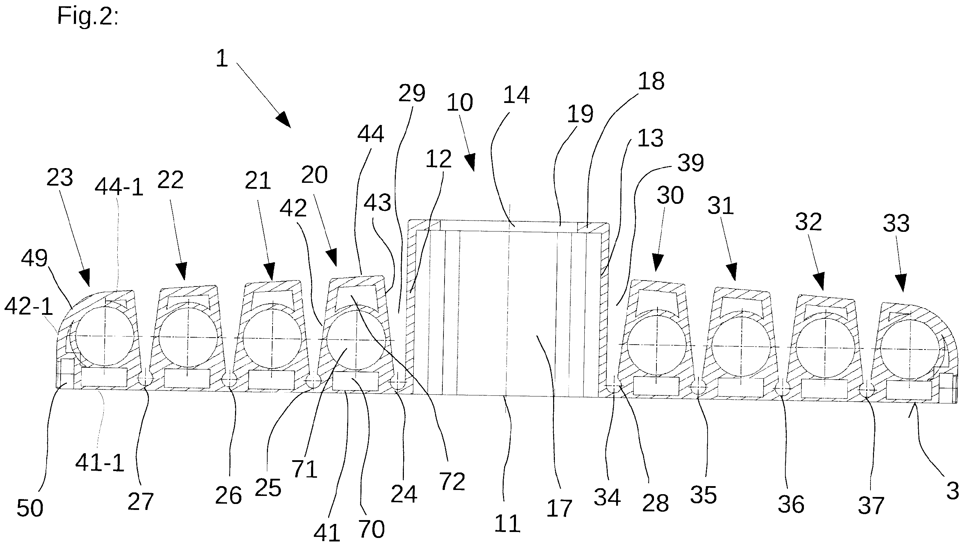

A camera mounting apparatus 1 according to an exemplary embodiment of the invention, as it is shown in Fig.1, comprises a hollow main body 10, at least one side body 20 and an interlinkage 24 connecting the hollow main body 10 and the side body 20 to each other at an underside 3 of the camera mounting apparatus 1. Fig.2 illustrates a cross-sectional view of the camera mounting apparatus 1.

A base wall 11 that forms an underside of the hollow main body 10 and a base wall 41 that forms an underside of the at least one side body 20 form the underside 3 of the camera mounting apparatus 1, the underside 3 being configured to abut against a surface of a vehicle.

The at least one side body 20 forms a rib, wherein the rib is formed like a elongated beam providing rigidity along a length of the side body 20. The base wall 41 of the at least one side body 20 is configured to abut against a surface of the vehicle, e.g. a roof top surface of a car. The at least one side body 20 comprises in its inner space at least one magnet receiving portion 70 located at the underside of the side body 20. The magnet receiving portion 70 is configured to receive a magnet for holding the vehicle camera mounting apparatus 1 on the surface of the vehicle through magnetic attraction force in interaction with the surface of the vehicle, which is for example manufactured from metal.

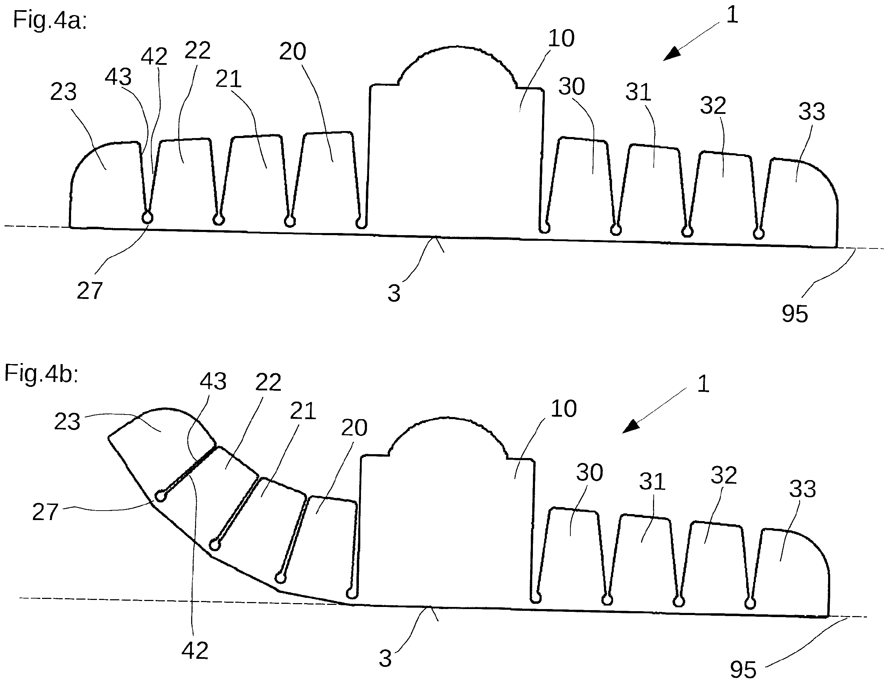

The interlinkage 24 is located at the respective underside of the side body 20 and the hollow main body 10, and is configured to provide a gap 29 between the hollow main body 10 and the at least one side body 20 and to flexibly and elastically connect the hollow main body 10 and the side body 20 such that the side body 20 is capable of being removed from the surface of the vehicle towards the hollow main body 10 so as to lift the at least one magnet from the surface 95 of the vehicle (see Fig. 4b).

The camera mounting apparatus 1 may comprise one or more side bodies, in this embodiment a plurality of side bodies 20 to 23 on one side of the hollow main body 10 and a plurality of side bodies 30 to 33 on an opposite side of the hollow main body 10. In principle the camera mounting apparatus 1 can comprise any number of side bodies.

The side body 20 is connected to one side of the hollow main body 10 by interlinkage 24. On an opposite side of the side body 20, the side body 20 is connected by an interlinkage 25 to the side body 21. The side body 22 is connected by an interlinkage 26 to an opposite side of the side body 21 and the side body 23 is connected by an interlinkage 27 to an opposite side of the side body 22. The interlinkages 24-27 are positioned at the underside 3 of the camera mounting apparatus 1. In principle it is also possible that not all but a number of the interlinkages are positioned at the underside 3 of the camera mounting apparatus 1. The side body 30 is connected to another side of the hollow main body 10 opposite to the side body 20 by interlinkage 34. Interlinkage 34 is configured to provide a gap 39 between the hollow main body 10 and the side body 30. The side body 31 is connected to the side body 30 opposite to the hollow main body 10 by interlinkage 35. The side body 32 is connected to the side body 31 opposite to the side body 30 by interlinkage 36. The side body 33 is connected to the side body 32 opposite to the side body 31 by interlinkage 37.

Interlinkages 24 to 27 and 34 to 37 can each be flexible and comprise an elasticity such that the interlinkages 24-27 and 34-37 return into their original shape after removal of the camera mounting apparatus 1 from the surface of the vehicle without any damages.

The hollow main body 10 comprises a cuboid shape with the base wall 11, a front wall 15 being a front surface with respect to a driving direction 5, a side wall 12 being a first side, a side wall 13 being a second side, a top wall 14 and a back wall 16. A length of the hollow main body 10 from the front wall 15 to the back wall 16 is greater than a height from the base wall 11 to the top wall 14 and is also greater than a width from the side wall 12 to the side wall 13. The front wall 15 connects a front portion of the base wall 11 with a front portion of the top wall 14 and may be inclined in a direction from the base wall 11 to the top wall 14 with respect to the surface of the vehicle. The front wall 15 can be directed in a moving direction of the vehicle, although other directions may also be possible. The side walls 12 and 13 can be arranged parallel to each other. The back wall 16 connects a back portion of the base wall 11 of the hollow main body 10 with a back portion of the top wall 14. The back wall may be inclined in a direction from the base wall 11 to the top wall 14 with respect to the surface of the vehicle.

The hollow main body 10 is configured to receive a camera in a camera receiving portion 17. The hollow main body 10 further comprises an opening 19 in the top wall 14 to allow a camera lens 85 to reach through the opening 19 of the hollow main body 10 to enable a line of sight of the camera outside the hollow main body 10, the opening 19 being arranged opposite to the base wall 11 of the hollow main body 10. The opening 19 provides a ridge that forms a retaining device 18 at the top wall 14 to hold the camera in the camera receiving portion 17 when the camera is inserted from the underside 3 of the camera mounting apparatus 1 into the camera receiving portion 17.

Each of the side bodies 20-23 and 30-33 forms a rib having the base wall 41, a front wall 45, two side walls 42 and 43, a top wall 44 and a back wall 46. The length of each side body from the front wall 45 to the back wall 46 is greater than the width from the side wall 42 to the side wall 43 and greater than the height from the base wall 41 to the top wall 44. The length of the side bodies 20-23 can decrease in a direction leading away from the hollow main body 10, the side body 20 being the longest one and the side body 23 being the shortest one of the side bodies. The same applies for the side bodies 30-33, wherein the side body 30 has the greatest length and the side body 33 has the shortest length. It is also possible that the side bodies 20-23 each comprise the same length or that two of the side bodies 20-23 are of the same length and the other two have different length. The height of the side bodies 20-23 can decrease in view from the hollow main body 10 to the outermost side body 23. However, it is also possible that the height of each of the side bodies 20-23 is the same or that two of the side bodies 20-23 each comprise the same height and the other two have different heights. The same dimensions and arrangements apply for the side bodies 30-33. Other embodiments with different dimensions are also possible.

The front wall 45 of the side body 20 connects the base wall 41 of the side body 20 to the top wall 44 of the side body 20. The connection between the front wall 45 and the top wall 44 being a round transition 47, thereby providing an advantageous aerodynamic structure. The front wall 45 can be inclined in a direction from the base wall 41 to the top wall 44 with respect to the surface of the vehicle. The back wall 46 of the side body 20 connects the base wall 41 of the side body 20 to the top wall 44 of the side body 20. The connection between the back wall 46 and the top wall 44 being a round transition 48, thereby providing an advantageous aerodynamic structure. The back wall 46 may be inclined in a direction from the base wall 41 to the top wall 44 with respect to the surface of the vehicle. Each of the side bodies 21-23 and 30-33 may comprise the features of the side body 20 as stated herein.

Furthermore, the side body 23, in this embodiment being the outer most side body of the camera mounting apparatus 1, comprises a round transition 49 between the side wall 42-1 and the top wall 44-1, the side wall 42-1 connecting the base wall 41-1 of the side body 23 to the top wall 44-1 of the side body 23. The round transition 49 can extend along the length of the side body 23. At a connection between the base wall 41-1 and the side wall 42-1 of the side body 23, a holding portion, particularly a recess 50, is formed to provide a holding portion for a user to safely attach and remove the camera mounting apparatus 1 from a surface of the vehicle. The same applies for the side body 33 on the opposite side of the camera mounting apparatus 1.

Each or some of the side bodies 20-23 and 30-33 preferably comprises a trapezoidal cross-section, wherein the top wall 44 has a lower extension in cross section than the base wall 41. The side wall 42 connects one side of the base wall 41 to one side of the top wall 44 and the side wall 43 connects the other side of the base wall 41 to the other side of the top wall 44. The side walls 42 and 43 are inclined towards each other in a direction from the base wall 41 to the top wall 44. The side walls 42 and 43 are inclined with respect to the normal to the base wall 41 of the corresponding side body, particularly at an angle between 2° and 10°, more particularly at an angle of 7°. For example, the top wall 44 of each of the side bodies 20-23 and 30-33 declines in a direction from the hollow main body 10 to the outer most side body with respect to the underside 3 of the camera mounting apparatus 1.

For example, the height of the hollow main body 10 is greater than the height of any of the side bodies 20-23 and 30-33. It is also possible that the height of the hollow main body 10 corresponds to the height of the side bodies 20 and 30.

Inside each of the side bodies 20-23 and 30-33 a magnet receiving portion 70 is located at the underside of each of the side bodies 20-23, 30-33. The magnet receiving portion 70 is configured to receive a magnet for holding the vehicle camera mounting apparatus 1 on the surface of the vehicle through magnetic attraction force in interaction with the surface of the vehicle. The magnets that may be inserted in the magnet receiving portion 70 of each of the side bodies 20-23 and 30-33 are arranged and dimensioned such that the magnetic attraction force increases in a direction from the outermost side bodies 23 and 33 to the side bodies 20 and 30 adjacent the hollow main body 10. The hollow main body 10 itself may comprise a magnet at its underside to further increase the magnetic force onto the surface of the vehicle of the camera mounting apparatus 1.

Each of the side bodies 20-23 and 30-33 comprises at least one electrical energy storage device receiving portion 71 to receive at least one electrical energy storage device, particularly one or more batteries, configured to provide electrical energy to the camera. The electrical energy storage device receiving portion 71 is positioned atop the magnet receiving portion 70 in view from the underside 3 of the camera mounting apparatus 1. However, it is also possible that only one or two or more of the side bodies 20-23 and 30-33 comprise a respective electrical energy storage device receiving portion 71. The electrical energy storage device receiving portion 71 may comprise a substantially cylindrical cross-section. At least one electrical energy storage device may be positioned in each or some of the electrical energy storage device receiving portion 71. Electrical connections may be provided separately or integrally in the hollow main body, side bodies and interlinkages, e.g. by respective leads or wires.

At least one of side bodies 20-23, 30-33 may be a side body 20-23, 30-33 which is hollow at least in parts thereof.

In the present embodiment, between the top wall 44 and the electrical energy storage device receiving portion 71 a hollow portion 72 is positioned in each of the side bodies 20-23 and 30-33. The hollow portion 72 is separated from the electrical energy storage device receiving portion 71.

Each of the interlinkages 24-27 and 34-37 may be formed by a material bridge. For example, the interlinkage 24 connects the hollow main body 10 with the side body 20 at the underside 3 of the camera mounting apparatus 1. More specifically, the interlinkage 24 is positioned in line with the underside 3 of the camera mounting apparatus 1. The interlinkage 24 is formed for example between the side wall 43 of the side body 20 and the side wall 12 of the hollow main body 10 by a recess 28 in a lower portion of the side wall 43 thereby thinning the interlinkage 24 to provide advantageous flexibility and elasticity. The same may apply for interlinkages 25-27 and 34-37 having at least a similar form to the interlinkage 24.

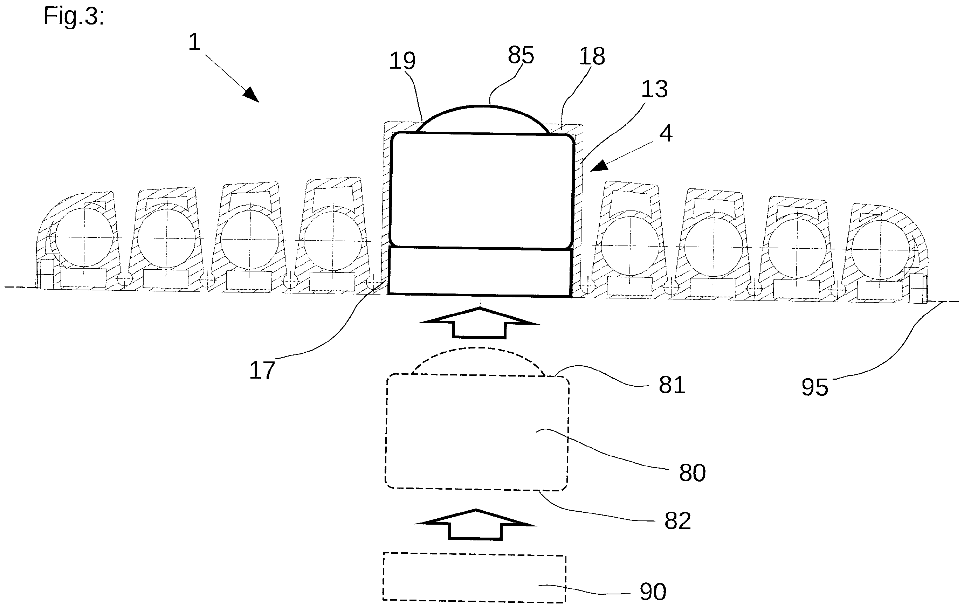

Fig.3 illustrates how a camera 80 may be positioned in the camera receiving portion 17 of the hollow main body 10 of the camera mounting apparatus 1. The camera 80 is inserted from the underside 3 of the camera mounting apparatus 1 into the camera receiving portion 17 until a top wall 81 of the camera 80 abuts at the retaining device 18. The camera lens 85 is positioned such that it reaches through the opening 19 of the hollow main body 10. In the embodiment of Fig.3 the camera 80 is positioned in the camera receiving portion 17 by an adapter base 90 that is positioned between a base wall 82 of the camera 80 and the surface 95 of the vehicle or the underside 3 of the camera mounting apparatus 1. The adapter base 90 may provide a solution to position and fix cameras of different sizes in the camera receiving portion 17. The adapter base 90 and thereby the camera 80 may be held in place individually in the camera receiving portion 17 without the need of the surface 95 of the vehicle. In another embodiment, the camera 80 may be held in place by the surface 95 of the vehicle.

Figs.4a and 4b illustrate how the camera mounting apparatus 1 may be removed from the vehicle. In Fig.4a, the camera mounting apparatus 1 is positioned on the surface 95 of the vehicle with the underside 3 abutting to the surface 95 of the vehicle. The surface 95 may be a car roof, an engine hood, a trunk top surface, or any other suitable surface. A user pulls at the outermost side body 23 thereby (only) overcoming the magnetic attraction force of the magnet inside the side body 23. The interlinkage 27 being flexible and allowing the side body 23 to move upwards without the side body 22 following the movement of the side body 23. As soon as the side wall 43 of the side body 23 abuts to the side wall 42 of the side body 22, the pulling force of the user enables to overcome the magnetic attraction force of the side body 22. This procedure may be resumed until the side bodies 23 to 20 are removed from the surface 95 of the vehicle. Due to the inclined side walls 42 and 43 abuuting agains each other, the interlinkage 27 is protected against deforming forces resulting from overstretching the interlinkage 27. The same applies for the interlinkages 24-26 and 34-37 and the removal of the side bodies 20, 21 and 30-33. The lever formed by the side body 23 and the side body 22 enables the user to overcome the magnetic attraction force of the side body 21 for removing the side body 21 from the surface 95 of the vehicle as well. This can be set forth until all the side bodies, in this embodiment side bodies 20-23 and 30-33, together with the hollow main body 10 are removed from the surface of the vehicle. In order to attach the camera mounting apparatus 1 to the surface 95 of the vehicle, the process described previously may be performed in reverse order.

Due to the rib structure of each of the side bodies 20-23 and 30-33 and the interlinkages 24-27 and 34-37 between the side bodies 20-23 and 30-33 and the hollow main body 10 it is possible to remove the camera mounting apparatus 1 safely from the surface 95 of the vehicle. In other words, the camera mounting apparatus 1 is wound from the surface 95 of the vehicle due to flexible and elastic interlinkages 24-27 and 34-37 connecting the different side bodies 20-23 and 30-33 and the hollow main body 10 to each other. At the same time, a sufficient stiffness may be provided.

While the invention has been described with reference to exemplary embodiments, it will be understood by those skilled in the art that various changes may be made and equivalents may be substituted for elements thereof without departing from the scope of the invention. In addition many modifications may be made to adopt a particular situation or material to the teachings of the invention without departing from the essential scope thereof. Therefore, it is intended that the invention not be limited to the particular embodiment disclosed, but that the invention include all embodiments falling within the scope of the following claims.

## Claims

1. A camera mounting apparatus (1) for mounting a camera (80) to a surface (95) of a vehicle, comprising:
a hollow main body (10) that is configured to receive a camera (80) and having an underside (11) which is configured to abut against the surface (95) of the vehicle;
at least one side body (20,30) having the form of a rib and having an underside (41) which is configured to abut against the surface (95) of the vehicle, and which comprises in its inner space at least one magnet receiving portion (70) located at the underside (41) of the side body (20,30), wherein the magnet receiving portion (70) is configured to receive a magnet for holding the vehicle camera mounting apparatus (1) on the surface (95) of the vehicle through magnetic attraction force in interaction with the surface (95) of the vehicle,
an interlinkage (24,34) which is located at the respective underside (41,11) of the side body (20,30) and the hollow main body (10), and which is configured to provide a gap (29,39) between the hollow main body (10) and the side body (20,30) and to flexibly and elastically connect the hollow main body (10) and the side body (20,30) such that the side body (20,30) is capable of being removed from the surface (95) of the vehicle towards the hollow main body (10) so as to lift the at least one magnet from the surface (95) of the vehicle.

2. The camera mounting apparatus (1) according to claim 1, wherein
the side body (20,30) is a first side body (20,30), and
the camera mounting apparatus (1) further comprises a second side body (21,31) having the form of a rib and an underside (41) which is configured to abut against the surface (95) of the vehicle and which is connected to the hollow main body (10) or the first side body (20,30), and which comprises in its inner space at least one magnet receiving portion (70) located at the underside (41) of the second hollow side body (21,31), wherein the magnet receiving portion (70) is configured to receive a magnet for holding the camera mounting apparatus (1) on the surface (95) of the vehicle through magnetic attraction force in interaction with the surface (95) of the vehicle.

3. The camera mounting apparatus (1) according to claim 2, wherein the second side body (30) is connected to the hollow main body (10) at a side opposite to the first side body (20) through a second interlinkage (34) which is located at the respective underside (11) of the hollow main body (10) and the second side body (30), and which is configured to flexibly and elastically connect the second side body (30) and the hollow main body (10).

4. The camera mounting apparatus (1) according to claim 2, wherein the second side body (21,31) is connected to the first side body (20,30) at a side opposite to the hollow main body (10).

5. The camera mounting apparatus (1) according to claim 4, wherein the second side body (21,31) is connected to the first side body (20,30) through a second interlinkage (25,35) which is located at the respective underside (41) of the first side body (20,30) and the second side body (21,31), and which is configured to flexibly and elastically connect the second side body (21,31) and the first side body (20,30) such that the second side body (21,31) is capable of being removed from the surface of the vehicle towards the first side body (20,30) so as to lift the at least one magnet of the second side body (21,31) from the surface (95) of the vehicle.

6. The camera mounting apparatus (1) according to claim 5, wherein the first side body (20,30), the second side body (21,31) and the second interlinkage (25,35) are formed such that the second side body (21,31) is capable of being removed from the surface (95) of the vehicle towards the first side body (20,30) up until the second side body (21,31) abuts against the first side body (20,30).

7. The camera mounting apparatus (1) according to any of the preceding claims, comprising multiple side bodies (20-23, 30-33) connected through respective interlinkages (24-27, 34-37) and arranged symmetrically at a first side (12) of the hollow main body (10) and a second side (13) of the hollow main body (10) opposite the first side (12), wherein each of the side bodies (20-23, 30-33) comprises at least one magnet, particularly comprising multiple side bodies (20-23, 30-33) on each side of the hollow main body (10).

8. The camera mounting apparatus (1) according to any of the preceding claims, comprising multiple side bodies (20-23, 30-33) arranged at one side of the hollow main body (10), wherein each of the side bodies (20-23, 30-33) comprises at least one magnet, wherein the magnets of the hollow side bodies (20-23, 30-33) are arranged and dimensioned such that the magnetic attraction force increases in a direction from an outermost side body (23,33) to the side body (20,30) adjacent the hollow main body (10).

9. The camera mounting apparatus (1) according to any of the preceding claims, wherein the at least one side body (20,30), or at least one of the side bodies (20-23, 30-33), respectively, further comprises in its inner space at least one electrical energy storage device receiving portion (71) to receive at least one electrical energy storage device, particularly one or more batteries, configured to provide electrical energy to the camera (80).

10. The camera mounting apparatus (1) according to claim 9, wherein the at least one electrical energy storage device receiving portion (71) comprises a substantially cylindrical cross-section.

11. The camera mounting apparatus (1) according to any of the preceding claims, wherein the at least one side body (20-23, 30-33) comprises a trapezoidal cross-section with a base wall (41) at the underside and a top wall (44) at a side opposite the underside, wherein the top wall (44) has a lower extension length than the base wall (41).

12. The camera mounting apparatus (1) according to claim 11, wherein the at least one side body (20-23, 30-33) further comprises at least one side wall (43, 42) adjacent to the hollow main body (10) connecting the base wall (41) and the top wall (44) of the at least one side body (20,30), wherein the at least one side wall (42, 43) is inclined with respect to the normal to the underside of the at least one hollow side body (20, 30), particularly at an angle between 2° and 10°, more particularly at an angle of 7°.

13. The camera mounting apparatus (1) according to any of the preceding claims, wherein the hollow main body (10) comprises in its inner space a camera receiving portion (17) that is configured to receive the camera (80), the camera receiving portion (17) arranged such as to receive the camera (80) from the underside (11) of the hollow main body (10) and comprising at least one retaining device (18) arranged to hold the camera (80) inside the camera receiving portion (17).

14. The camera mounting apparatus (1) according to claim 13, wherein the at least one retaining device (18) is arranged to hold the camera (80) inside the camera receiving portion (17) such as to allow a camera lens (85) to reach through an opening (19) of the hollow main body (10) at a top wall (14) opposite the underside (11) to enable a line of sight of the camera (80) outside the hollow main body (10).

15. The camera mounting apparatus (1) according to any of the preceding claims,
the hollow main body (10) comprises a front surface (15) extending from the underside (11) to a top wall (14) opposite the underside (11) with respect to a vehicle moving direction (5),
wherein the front surface (15) is inclined in a direction from the underside (11) to the top side (14) with respect to the surface (95) of the vehicle.

## Patentansprüche

1. Kameramontagevorrichtung (1) zum Montieren einer Kamera (80) an einer Oberfläche (95) eines Fahrzeugs, aufweisend:
einen hohlen Hauptkörper (10), der zum Aufnehmen einer Kamera (80) ausgebildet ist und eine Unterseite (11) aufweist, die zum Anliegen an der Oberfläche (95) des Fahrzeugs ausgebildet ist;
mindestens einen Seitenkörper (20, 30), der die Form einer Rippe hat und eine Unterseite (41) aufweist, die zum Anliegen an der Oberfläche (95) des Fahrzeugs ausgebildet ist, und der in seinem Innenraum mindestens einen Magnetaufnahmebereich (70) aufweist, der sich an der Unterseite (41) des Seitenkörpers (20, 30) befindet, wobei der Magnetaufnahmebereich (70) zum Aufnehmen eines Magneten ausgebildet ist, um die Fahrzeugkameramontagevorrichtung (1) durch magnetische Anziehungskraft in Wechselwirkung mit der Oberfläche (95) des Fahrzeugs an der Oberfläche (95) des Fahrzeugs zu halten,
eine Verbindungseinrichtung (24, 34), die sich an der jeweiligen Unterseite (41, 11) des Seitenkörpers (20, 30) und des hohlen Hauptkörpers (10) befindet und die derart ausgebildet ist, dass ein Spalt (29, 39) zwischen dem hohlen Hauptkörper (10) und dem Seitenkörper (20, 30) gebildet ist, und die den hohlen Hauptkörper (10) und den Seitenkörper (20, 30) flexibel und elastisch derart verbindet, dass der Seitenkörper (20, 30) von der Oberfläche (95) des Fahrzeugs in Richtung auf den hohlen Hauptkörper (10) entfernt werden kann, um dadurch den mindestens einen Magneten von der Oberfläche (95) des Fahrzeugs abzuheben.

2. Kameramontagevorrichtung (1) nach Anspruch 1,
wobei es sich bei dem Seitenkörper (20, 30) um einen ersten Seitenkörper (20, 30) handelt, und
wobei die Kameramontagevorrichtung (1) ferner einen zweiten Seitenkörper (21, 31) aufweist, der die Form einer Rippe hat und eine Unterseite (41) aufweist, die zum Anliegen an der Oberfläche (95) des Fahrzeugs ausgebildet ist, und der mit dem hohlen Hauptkörper (10) oder dem ersten Seitenkörper (20, 30) verbunden ist und der in seinem Innenraum mindestens einen Magnetaufnahmebereich (70) aufweist, der sich an der Unterseite (41) des zweiten hohlen Seitenkörpers (21, 31) befindet, wobei der Magnetaufnahmebereich (70) zum Aufnehmen eines Magneten ausgebildet ist, um die Kameramontagevorrichtung (1) durch magnetische Anziehungskraft in Wechselwirkung mit der Oberfläche (95) des Fahrzeugs an der Oberfläche (95) des Fahrzeugs zu halten.

3. Kameramontagevorrichtung (1) nach Anspruch 2,
wobei der zweite Seitenkörper (30) auf einer dem ersten Seitenkörper (20) gegenüberliegenden Seite mit dem hohlen Hauptkörper (10) durch eine zweite Verbindungseinrichtung (34) verbunden ist, die sich an der jeweiligen Unterseite (11) des hohlen Hauptkörpers (10) und des zweiten Seitenkörpers (30) befindet und dazu ausgebildet ist, den zweiten Seitenkörper (30) und den hohlen Hauptkörper (10) flexibel und elastisch miteinander zu verbinden.

4. Kameramontagevorrichtung (1) nach Anspruch 2,
wobei der zweite Seitenkörper (21, 31) an einer dem hohlen Hauptkörper (10) gegenüberliegenden Seite mit dem ersten Seitenkörper (20, 30) verbunden ist.

5. Kameramontagevorrichtung (1) nach Anspruch 4,
wobei der zweite Seitenkörper (21, 31) mit dem ersten Seitenkörper (20, 30) durch eine zweite Verbindungseinrichtung (25, 35) verbunden ist, die an der jeweiligen Unterseite (41) des ersten Seitenkörpers (20, 30) und des zweiten Seitenkörpers (21, 31) befindet und dazu ausgebildet ist, den zweiten Seitenkörper (21, 31) und den ersten Seitenkörper (20, 30) flexibel und elastisch miteinander zu verbinden, so dass der zweite Seitenkörper (21, 31) von der Oberfläche des Fahrzeugs in Richtung auf den ersten Seitenkörper (20, 30) entfernt werden kann, um dadurch den mindestens einen Magneten des zweiten Seitenkörpers (21, 31) von der Oberfläche (95) des Fahrzeugs abzuheben.

6. Kameramontagevorrichtung (1) nach Anspruch 5,
wobei der erste Seitenkörper (20, 30), der zweite Seitenkörper (21, 31) und die zweite Verbindungseinrichtung (25, 35) derart ausgebildet sind, dass der zweite Seitenkörper (21, 31) von der Oberfläche (95) des Fahrzeugs in Richtung auf den ersten Seitenkörper (20, 30) entfernt werden kann, bis der zweite Seitenkörper (21, 31) an dem ersten Seitenkörper (20, 30) anliegt.

7. Kameramontagevorrichtung (1) nach einem der vorhergehenden Ansprüche,
die mehrere Seitenkörper (20-23, 30-33) aufweist, die durch jeweilige Verbindungseinrichtungen (24-27, 34-37) verbunden sind und auf einer ersten Seite (12) des hohlen Hauptkörpers (10) und einer der ersten Seite (12) gegenüberliegenden zweiten Seite (13) des hohlen Hauptkörpers (10) symmetrisch angeordnet sind, wobei jeder der Seitenkörper (20-23, 30-33) mindestens einen Magneten aufweist und insbesondere mehrere Seitenkörper (20-23, 30-33) auf jeder Seite des hohlen Hauptkörpers (10) aufweist.

8. Kameramontagevorrichtung (1) nach einem der vorhergehenden Ansprüche,
die mehrere Seitenkörper (20-23, 30-33) aufweist, die auf einer Seite des hohlen Hauptkörpers (10) angeordnet sind, wobei jeder der Seitenkörper (20-23, 30-33) mindestens einen Magneten aufweist, wobei die Magnete der hohlen Seitenkörper (20-23, 30-33) derart angeordnet und dimensioniert sind, dass die magnetische Anziehungskraft in einer Richtung von einem äußersten Seitenkörper (23, 33) zu dem dem hohlen Hauptkörper (10) benachbarten Seitenkörper (20, 30) zunimmt.

9. Kameramontagevorrichtung (1) nach einem der vorhergehenden Ansprüche,
wobei der mindestens eine Seitenkörper (20, 30) oder mindestens einer der Seitenkörper (20-23, 30-33) ferner in seinem Innenraum mindestens einen Aufnahmebereich (71) für eine elektrische Energiespeichervorrichtung aufweist, um mindestens eine elektrische Energiespeichervorrichtung, insbesondere eine oder mehrere Batterien, aufzunehmen, die dazu ausgebildet sind, der Kamera (80) elektrische Energie zuzuführen.

10. Kameramontagevorrichtung (1) nach Anspruch 9,
wobei der mindestens eine Aufnahmebereich (71) für eine elektrische Energiespeichervorrichtung einen im Wesentlichen zylindrischen Querschnitt aufweist.

11. Kameramontagevorrichtung (1) nach einem der vorhergehenden Ansprüche,
wobei der mindestens eine Seitenkörper (20-23, 30-33) einen trapezförmigen Querschnitt mit einer Basiswand (41) an der Unterseite und einer oberen Wand (44) auf einer der Unterseite gegenüberliegenden Seite aufweist, wobei die obere Wand (44) eine geringere Erstreckungslänge als die Basiswand (41) aufweist.

12. Kameramontagevorrichtung (1) nach Anspruch 11,
wobei der mindestens eine Seitenkörper (20-23, 30-33) ferner mindestens eine Seitenwand (43, 42) benachbart dem hohlen Hauptkörper (10) aufweist, die die Basiswand (41) und die obere Wand (44) des mindestens einen Seitenkörpers (20, 30) miteinander verbindet, wobei die mindestens eine Seitenwand (42, 43) in Bezug auf die Normale auf die Unterseite des mindestens einen hohlen Seitenkörpers (20, 30) geneigt ist, insbesondere in einem Winkel zwischen 2° und 10°, im Spezielleren in einem Winkel von 7°.

13. Kameramontagevorrichtung (1) nach einem der vorhergehenden Ansprüche,
wobei der hohle Hauptkörper (10) in seinem Innenraum einen Kameraaufnahmebereich (17) aufweist, der zum Aufnehmen der Kamera (80) ausgebildet ist, wobei der Kameraaufnahmebereich (17) derart ausgebildet ist, dass er die Kamera (80) von der Unterseite (11) des hohlen Hauptkörpers (10) aufnimmt, sowie mindestens eine Rückhaltevorrichtung (18) aufweist, die zum Halten der Kamera (80) im Inneren des Kameraaufnahmebereichs (17) ausgebildet ist.

14. Kameramontagevorrichtung (1) nach Anspruch 13,
wobei die mindestens eine Rückhaltevorrichtung (18) dazu ausgebildet ist, die Kamera (80) derart im Inneren des Kameraaufnahmebereichs (17) zu halten, dass sich ein Kameraobjektiv (85) durch eine Öffnung (19) des hohlen Hauptkörpers (10) an einer der Unterseite (11) gegenüberliegenden oberen Wand (14) hindurch erstrecken kann, um eine Sichtlinie der Kamera (80) außerhalb des hohlen Hauptkörpers (10) zu ermöglichen.

15. Kameramontagevorrichtung (1) nach einem der vorhergehenden Ansprüche,
wobei der hohle Hauptkörper (10) in Bezug auf eine Fahrzeugbewegungsrichtung (5) eine vordere Fläche (15) aufweist, die sich von der Unterseite (11) zu einer der Unterseite (11) gegenüberliegenden oberen Wand (14) erstreckt,
wobei die vordere Fläche (14) in Bezug auf die Oberfläche (95) des Fahrzeugs in einer Richtung von der Unterseite (11) zu der Oberseite (14) geneigt ist.

## Revendications

1. Appareil de montage (1) pour une caméra, destiné au montage d'une caméra (80) sur une surface d'un véhicule, comprenant :
un corps principal creux (10) qui est configuré pour que vienne s'y loger une caméra (80) et possédant un côté inférieur (11) qui est configuré pour venir s'appuyer contre la surface (95) du véhicule ;
au moins un corps latéral (20, 30) possédant la forme d'une nervure et possédant un côté inférieur (41) qui est configuré pour venir s'appuyer contre la surface (95) du véhicule, et qui comprend, dans son espace interne, au moins une portion de réception d'aimant (70) disposée contre le côté inférieur (41) du corps latéral (20, 30) ; dans lequel la portion de réception d'aimant (70) est configurée pour que vienne s'y loger un aimant destiné au maintien de l'appareil de montage (1) pour une caméra de véhicule sur la surface (95) du véhicule via une force d'attraction magnétique en interaction avec la surface (95) du véhicule ;
une interconnexion (24, 34) qui est disposée contre le côté inférieur respectif (41, 11) du corps latéral (20, 30) et du corps principal creux (10), et qui est configurée pour procurer un espace libre (29, 39) entre le corps principal creux (10) et le corps latéral (20, 30) et pour relier de manière flexible et de manière élastique le corps principal creux (10) et le corps latéral (20, 30), d'une manière telle que le corps latéral (20, 30) a la capacité d'être retiré de la surface (95) du véhicule en direction du corps principal creux (10) de façon à soulever ledit au moins un aimant par rapport à la surface (95) du véhicule.

2. Appareil de montage (1) pour une caméra selon la revendication 1, dans lequel :
le corps latéral (20, 30) représente un premier corps latéral (20, 30) ; et
l'appareil de montage (1) pour une caméra comprend en outre un deuxième corps latéral (21, 31) possédant la forme d'une nervure et un côté inférieur (41) qui est configuré pour s'appuyer contre la surface (95) du véhicule et qui est relié au corps principal creux (10) ou au premier corps latéral (20, 30), et qui comprend, dans son espace interne, au moins une portion de réception d'aimant (70) disposée contre le côté inférieur (41) du deuxième corps latéral creux (21, 31) ; dans lequel la portion de réception d'aimant (70) est configurée pour que vienne s'y loger un aimant destiné au maintien de l'appareil de montage (1) pour une caméra sur la surface (95) du véhicule via une force d'attraction magnétique en interaction avec la surface (95) du véhicule.

3. Appareil de montage (1) pour une caméra selon la revendication 2, dans lequel le deuxième corps latéral (30) est relié au corps principal creux (10) à un côté opposé au premier corps latéral (20) via une seconde interconnexion (34) qui est disposée contre le côté inférieur respectif (11) du corps principal creux (10) et du deuxième corps latéral (30), et qui est configurée pour relier de manière flexible et de manière élastique le deuxième corps latéral (30) et le corps principal creux (10).

4. Appareil de montage (1) pour une caméra selon la revendication 2, dans lequel le deuxième corps latéral (21, 31) est relié au premier corps latéral (20, 30) à un côté opposé au corps principal creux (10).

5. Appareil de montage (1) pour une caméra selon la revendication 4, dans lequel le deuxième corps latéral (21, 31) est relié au premier corps latéral (20, 30) via une seconde interconnexion (25, 35) qui est disposée contre le côté inférieur respectif (41) du premier corps latéral (20, 30) et du deuxième corps latéral (21, 31), et qui est configurée pour relier de manière flexible et de manière élastique le deuxième corps latéral (21, 31) et le premier corps latéral (20, 30), d'une manière telle que le deuxième corps latéral (21, 31) a la capacité d'être retiré de la surface du véhicule en direction du premier corps latéral (20, 30) de façon à soulever ledit au moins un aimant du deuxième corps latéral (21, 31) par rapport à la surface (95) du véhicule.

6. Appareil de montage (1) pour une caméra selon la revendication 5, dans lequel le premier corps latéral (20, 30), le deuxième corps latéral (21, 31) et la seconde interconnexion (25, 35) sont réalisés d'une manière telle que le deuxième corps latéral (21, 31) a la capacité d'être retiré de la surface (95) du véhicule en direction du premier corps latéral (20, 30) vers le haut jusqu'à ce que le deuxième corps latéral (21, 31) vienne s'appuyer contre le premier corps latéral (20, 30).

7. Appareil de montage (1) pour une caméra selon l'une quelconque des revendications précédentes, comprenant plusieurs corps latéraux (20-23, 30-33) reliés via des interconnexions respectives (24-27, 34-37) et disposés de manière symétrique contre un premier côté (12) du corps principal creux (10) et contre un deuxième côté (13) du corps principal creux (10), opposé au premier côté (12) ; dans lequel chacun des corps latéraux (20-23, 30-33) comprend au moins un aimant, en particulier comprenant plusieurs corps latéraux (20-23, 30-33) de chaque côté du corps principal creux (10).

8. Appareil de montage (1) pour une caméra selon l'une quelconque des revendications précédentes, comprenant plusieurs corps latéraux (20-23, 30-33) disposés d'un côté du corps principal creux (10) ; dans lequel chacun des corps latéraux (20-23, 30-33) comprend au moins un aimant ; dans lequel les aimants des corps latéraux creux (20-23, 30-33) sont disposés et sont dimensionnés d'une manière telle que la force d'attraction magnétique augmente dans une direction allant d'un corps latéral (23, 33) le plus éloigné jusqu'au corps latéral (20, 30) adjacent au corps principal creux (10).

9. Appareil de montage (1) pour une caméra selon l'une quelconque des revendications précédentes, dans lequel ledit au moins un corps latéral (20, 30), au moins un des corps latéraux (20-23, 30-33), respectivement, comprend en outre, dans son espace interne, au moins une portion de réception (71) pour un dispositif de stockage de l'énergie électrique, destinée à recevoir au moins un dispositif de stockage de l'énergie électrique, en particulier un ou plusieurs accumulateurs, configurés pour fournir de l'énergie électrique à la caméra (80).

10. Appareil de montage (1) pour une caméra selon la revendication 9, dans lequel ladite au moins une portion de réception (71) pour un dispositif de stockage de l'énergie électrique comprend une section transversale essentiellement cylindrique.

11. Appareil de montage (1) pour une caméra selon l'une quelconque des revendications précédentes, dans lequel ledit au moins un corps latéral (20-23, 30-33) comprend une section transversale de configuration trapézoïdale comprenant une paroi de base (41) contre le côté inférieur et une paroi supérieure (44) contre un côté opposé au côté inférieur; dans lequel la paroi supérieure (44) possède une longueur d'extension inférieure à celle de la paroi de base (41).

12. Appareil de montage (1) pour une caméra selon la revendication 11, dans lequel ledit au moins un corps latéral (20-23, 30-33) comprend en outre au moins une paroi latérale (43, 42) en position adjacente au corps principal creux (10), reliant la paroi de base (41) et la paroi supérieure (44) dudit au moins un corps latéral (20, 30) ; dans lequel ladite au moins une paroi latérale (42, 43) est inclinée par rapport à la normale au côté inférieur dudit au moins un corps latéral creux (20, 30), en particulier en formant un angle entre 2° et 10°, plus particulièrement en formant un angle de 7°.

13. Appareil de montage (1) pour une caméra selon l'une quelconque des revendications précédentes, dans lequel le corps principal creux (10) comprend, dans son espace interne, une portion de réception de caméra (17) qui est configuré pour que vienne s'y loger la caméra (80), la portion de réception de caméra (17) étant conçue pour que vienne s'y loger la caméra (80) à partir du côté inférieur (11) du corps principal creux (10) et comprenant au moins un dispositif de maintien (18) conçu pour maintenir la caméra (80) à l'intérieur de la portion de réception de caméra (17).

14. Appareil de montage (1) pour une caméra selon la revendication 13, dans lequel ledit au moins dispositif de maintien (18) est conçu pour maintenir la caméra (80) à l'intérieur de la portion de réception de caméra (17) de façon à permettre à un objectif de caméra (85) de traverser une ouverture (19) du corps principal creux (10) contre une paroi supérieure (14) opposée au côté inférieur (11) pour permettre une ligne de visée de la caméra (80) à l'extérieur du corps principal creux (10).

15. Appareil de montage (1) pour une caméra selon l'une quelconque des revendications précédentes, dans lequel le corps principal creux (10) comprend une surface avant (15) s'étendant à partir du côté inférieur (11) jusqu'à une paroi supérieure (14) opposée au côté inférieur (11) par rapport à une direction de déplacement (5) du véhicule ; dans lequel la surface avant (15) est inclinée dans une direction allant du côté inférieur (11) jusqu'au côté supérieur (14) par rapport à la surface (95) du véhicule.
